# EUROPÄISCHE PATENTSCHRIFT

(11) **EP 3 610 570 B1**
(45) Veröffentlichungstag und Bekanntmachung des Hinweises auf die Patenterteilung: **03.11.2021**
(21) Anmeldenummer: 18799749.9
(22) Anmeldetag: 07.11.2018
(51) Int. Cl.: H02P 21/05, H02P 6/10

(54) **KAPAZITÄTSREDUZIERUNG**
CAPACITANCE REDUCTION
RÉDUCTION DE CAPACITÉ

(30) Priorität: 08.11.2017 DE 102017126150
(43) Veröffentlichungstag der Anmeldung: 19.02.2020
(73) Patentinhaber: EBM-Papst Mulfingen GmbH&CO. KG, 74673 Mulfingen (DE)
(72) Erfinder: WYSTUP, Ralph, 74653 Künzelsau (DE)
(74) Vertreter: Staeger & Sperling Partnerschaftsgesellschaft mbB
(86) Internationale Anmeldenummer: PCT/EP2018/080395
(87) Internationale Veröffentlichungsnummer: WO 2019/091996

(56) Entgegenhaltungen:
- EP-A1- 2 276 162
- EP-A2- 0 977 337
- EP-B1- 0 977 337
- EP-B1- 2 276 162
- DE-A1- 19 834 315
- DE-A1-102012 010 092
- RALF ROTHFUSS ET AL: "Flachheit: Ein neuer Zugang zur Steuerung und Regelung nichtlinearer Systeme", AUTOMATISIERUNGSTECHNIK - AT., Bd. 45, Nr. 11, 1. November 1997 (1997-11-01), XP055551430, DE ISSN: 0178-2312, DOI: 10.1524/auto.1997.45.11.517

## Beschreibung

Die Erfindung betrifft ein Verfahren zur Reduzierung der Drehmomentwelligkeit eines einphasig gespeisten EC-Motors.

Das Schaltungsprinzip der in Ventilatoren meist eingesetzten EC-Motoren ist bekanntermaßen nicht völlig frei von Rückwirkungen auf das Netz. Durch den pulsförmigen Aufnahmestrom von EC-Ventilatoren entstehen Stromoberschwingungen. Diese belasten das Versorgungsnetz und können zu erhöhten Verlusten aufgrund von Blindleistung führen, sogar andere Geräte im Anlagennetz können negativ beeinflusst werden. Ferner führen diese auch zu einer nicht ausreichend konstanten Stromaufnahme und damit Drehmomentwelligkeit der Motoren. Um dies zu verhindern, gibt es diverse, in der Elektronik integrierte Lösungen, wie z. B. die aktive oder passive Leistungsfaktorkorrektur (PFC -Power Factor Correction).

Um bei einphasig-netzgespeisten EC-Motoren einen zeitlich sinusförmigen Verlauf des Netzstromes zu erhalten, wird dafür klassisch eine PFC-Schaltung vorgesehen, welche an ihrem Ausgang ein geglättete Gleichspannung bereitstellt. Bei einer bekannten Methode wird z. B. der pulsförmige Aufnahmestrom der EC-Motoren in einen sinusförmigen Strom umgewandelt und dann in einem nachfolgenden zweiten Schritt die Lage der Stromkurve so verschoben, dass sie gleichphasig zur Spannung ist. Auf diese Weise können z. B. die Oberschwingungsanteile im Eingangsstrom stark reduziert werden.

Um dies zu bewerkstelligen benötigt die PFC-Schaltung einen ausreichend groß bemessenen Elektrolytkondensator im Zwischenkreis. Bei Spannungszwischenkreis - Umrichtern werden solche Kondensatoren als Energiespeicher zur Entkopplung des lastseitigen und des netzseitigen Stromrichters eingesetzt. Reduziert man jedoch die Kapazität des Zwischenkreiskondensators oder lässt diesen, wie beim "schlanken Zwischenkreis" komplett entfallen, erhält man am Ausgang der PFC-Schaltung eine pulsierende Gleichspannung mit überlagerter Wechselspannung, die zu einer Drehmomentwelligkeit führt.

Die EP 0 802 623 A1 offenbart z. B. einen Frequenzumrichter, der mit einer Gleichspannungsquelle versorgt wird und wobei der Umrichter einen Zwischenspeicher zum Speichern von Kommutierungsenergie aufgrund von Umladevorgängen in einzelnen Phasenwicklungen umfasst.

Aus der EP 0 738 035 A2 ist es bekannt, einen Frequenzumrichter ohne Glättungskondensator auszubilden. Hierbei wird die Energie während der Umladevorgänge in einem Kondensator zwischengespeichert, der zwischen dem geschalteten Minus-Pol des Phasenanschlusses und dem Minus-Pol des Gleichspannungs-Zwischenkreises geschaltet ist. Auch dieser als Zwischenspeicher fungierende Kondensator muss für die gesamte Spannung des Zwischenkreises, die sich aus der Summe des Scheitelwertes der Netzspannung und dem Spannungsanteil einer beim Kommutieren abmagnetisierenden Spule zusammensetzt, dimensioniert sein und kann nicht beliebig verkleinert werden, ohne dass es zu der besagten unerwünschten Welligkeit kommt.

Aus der DE 44 06 546 B4 ist ein Frequenzumrichter zum Betreiben eines Motors bekannt, der einen gleichgerichteten und nahezu vollständig geglätteten Gleichspannungszwischenkreis umfasst. Eine Kombination aus Trafo und Kondensator bildet hier den gemeinsamen Zwischenspeicher für die Energie während der Umladevorgänge. Hierbei wird der Trafo mittels eines weiteren Schalters getaktet, so dass eine optimierte Übertragung der Energie während der Umladevorgänge bereitgestellt wird. Aufgrund des zusätzlichen Übertragers ist der Frequenzumrichter aber recht aufwändig und teuer.

Andere alternative Lösungen sehen zum Beispiel die Nutzung des Stators des EC-Motors als Kondensator (Statorkondensator) vor oder die Nutzung der Nullinduktivität als Zwischenspeicher.

Weiterer druckschriftlicher Stand der Technik im vorliegenden technischen Gebiet, welcher der Oberbegriff des Anspruchs 1 wiederspiegelt, ist in den Dokumenten EP 2 276 162 A1, Ralf Rothfuss et al: "Flachheit: Ein neuer Zugang zur Steuerung und Regelung nichtlinearer Systeme", EP 0 977 337 A2 und DE 10 2012 010092 A1 offenbart.

Da die Glättungskondensatoren kostentreibend sind, ist es aber wünschenswert eine Reduzierung der verbauten Kapazität bei EC-Motoren mit Leistungsfaktorkorrektur (PFC) am Netzeingang zu realisieren. Für die Erzeugung eines konstanten Motordrehmomentes, was für einen geräuscharmen Ventilatorbetrieb zwingend notwendig ist, benötigt man eine konstante Gleichspannung, welche zu einer konstanten Motorleistung und damit bei konstanter Drehzahl zu einem konstanten Motordrehmoment führt. Die elektrische Leistung ist jedoch bei einer pulsierenden Gleichspannung nur dann konstant, wenn auch der Strom so pulsiert, dass wiederum das Produkt aus Strom und Spannung konstant ist.

Es ist daher Aufgabe der vorliegenden Erfindung, vorbesagte Nachteile zu überwinden und eine kostengünstige und zuverlässige Lösung für einphasig gespeiste EC-Motoren mit Leistungsfaktorkorrektur (PFC) am Netzeingang bereit zu stellen.

Diese Aufgabe wird durch die Merkmalskombination gemäß Anspruch 1 und Anspruch 7 gelöst.

Ein Grundgedanke der vorliegenden Erfindung besteht darin, dass die Speicherung von Energie im Motor und nicht nur oder ausschließlich in einem Elektrolytkondensator erfolgt und zwar durch die gezielte Vorgabe einer dynamischen id-Strom-Trajektorie. Dabei kann die Anpassung der Stromaufnahme bei EC-Motoren bei pulsierender Gleichspannung am Wechselrichtereingang durch die Anpassung des feldbildenden id-Stromes erreicht werden.

Erfindungsgemäß wird hierzu ein Verfahren durch die Merkmale des unabhängigen Anspruchs 1 definiert.

Anders als bei PFC-Schaltungen mit einem ausreichend groß dimensionierten Zwischenkreiskondensator zum Speichern der (elektrischen) Energie, ist vorliegend der Kondensator bestimmungsgemäß unterdimensioniert, so dass die elektrische Energie anderweitig gespeichert werden muss und zwar, wie erfindungsgemäß vorgeschlagen, im EC-Motor als Feldenergie in den Motorwicklungen. So bewirkt eine Änderung des id-Stromes eine Speicherung von magnetischer Energie.

Die durch die Pulsation der Gleichspannung hervorgerufene unerwünschte Pulsation des Motordrehmomentes, infolge von unterdimensionierten Elektrolytkondensatoren, kann somit durch eine Steuerung des id-Stromes erfindungsgemäß ausgeglichen werden. Um den hierzu erforderlichen hochdynamischen Stromverlauf zu realisieren, wird im Zusammenhang mit der Reduzierung der PFC-Kapazitäten, eine Trajektorien gesteuerte flachheitsbasierte nichtlineare Regelung im Zustandsraum verwendet. Die Verwendung dieses Regelungskonzepts ermöglichte es den erforderlichen id-Stromverlauf, exakt bzw. gewünscht einzuregeln.

Gemäß einer bevorzugten Ausgestaltung der Erfindung ist vorgesehen, dass die Steuerung zur Speicherung der Energie die Anpassung des feldbildenden id-Stromanteils umfasst. Wobei erfindungsgemäß zur Steuerung des id-Stroms die zuvor genannte Trajektorien gesteuerte flachheitsbasierte nichtlineare Regelung im Zustandsraum verwendet wird.

In einer vorteilhaften Ausgestaltung der Erfindung ist vorgesehen, dass die Frequenz der id-Strom-Trajektorie der doppelten Netzfrequenz der Netzwechselspannung U_{N} entspricht und mit der Netzfrequenz synchronisiert wird.

Weiter vorteilhaft ist es, wenn die Amplitude und Phasenlage des id-Stroms gegenüber der Netzwechselspannung U_{N} von einer zweiten, der primären Regelung überlagerten Regelung so eingestellt wird, dass die Pulsation der im Zwischenkreis erzeugten Gleichspannung reduziert oder (vorzugsweise auf ein Minimum) minimiert wird.

Da es sich bei dem vorgeschlagenen Regelungskonzept um einen Regelung handelt, welche zwei Ausgangsgrößen (Amplitude des id-Stromes und die Phasenlage zur Netzspannung) sowie eine Eingangsgröße (Pulsationsamplitude) handelt, wird als zusätzliche Regelbedingung gefordert, dass die Amplitude des id-Stromes möglichst klein zu halten ist, um die Verluste durch den zusätzlichen id-Strom zu minimieren. Hierzu wird die Amplitude des id-Stromes bei der Regelung im möglichen Amplituden-Phasenlagen-Regelfeld möglichst klein gewählt wird.

Eine weitere vorteilhafte Ausgestaltung der Erfindung sieht vor, dass die Amplitude des id-Stroms negativ eingeprägt wird, um durch die dadurch erzielte Feldschwächung eine Reduzierung der Eisenverluste im EC-Motor zu erhalten. In einem besonders günstigen Fall heben sich die zusätzlichen Verluste durch den id-Strom mit der Reduzierung der Eisenverluste durch den id-Strom genau auf und der Vorteil der Reduzierung der Kapazität des Zwischenkreiskondensators geht nicht auf Kosten eines schlechteren Wirkungsgrades des EC-Motors.

Ein weiterer Aspekt der vorliegenden Erfindung betrifft einen einphasig speisbarer EC-Motor, welcher durch die Merkmale des unabhängigen Anspruchs 7 definiert ist.

Mit Vorteil ist der EC-Motor so ausgebildet, dass eine zweite Regelung vorgesehen ist, um die Amplitude und Phasenlage des id-Stroms gegenüber der Netzwechselspannung U_{N} einzustellen.

In einer weiteren vorteilhaften Ausgestaltung der Erfindung ist vorgesehen, dass die zweite Regelung zur Anpassung der Phasenlage und Amplitude des id-Stroms so ausgebildet ist, dass damit die Pulsation einer im Zwischenkreis erzeugten Gleichspannung reduziert oder minimiert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Ansicht eines erfindungsgemäßen EC-Motors und
- Fig. 2: eine Abbildung des Verlaufes des id-Stromes über die Zeit.

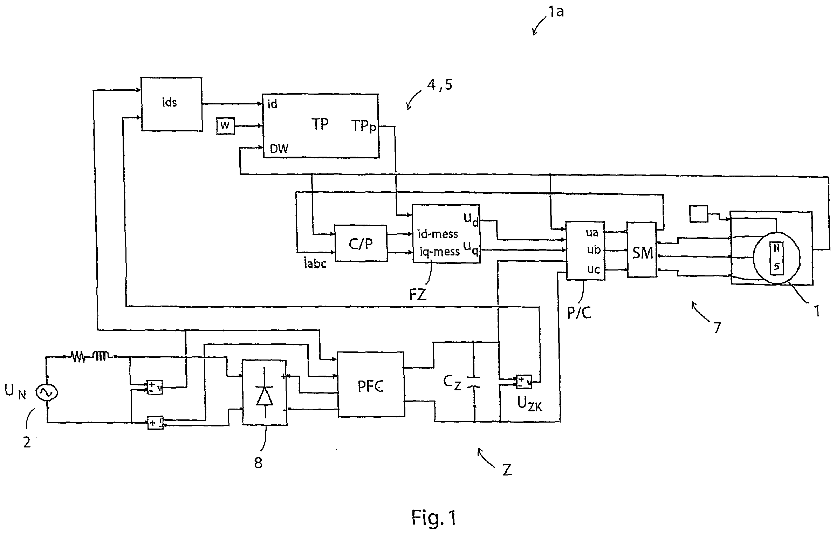

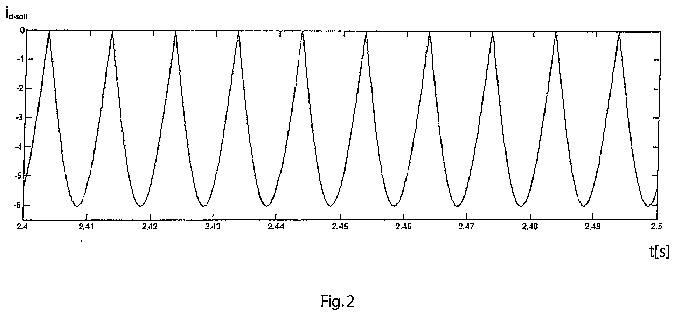

Im Folgenden wird die Erfindung mit Bezug auf die Figuren 1 und 2 anhand eines exemplarischen Ausführungsbeispiels der Erfindung näher beschrieben.

In der Fig. 1 wird hierzu eine schematische Ansicht eines EC-Motors 1 für einen Ventilator gezeigt. Der EC-Motor 1 ist mit einer Schaltungsanordnung 1a verbunden, umfassend einen Zwischenkreis Z (bzw. eine Zwischenkreisschaltung Z) zum Erzeugen der Zwischenkreisgleichspannung U_{ZK}, wobei der Zwischenkreis mit einem Zwischenkreiskondensator C_{Z} ausgebildet ist. Ferner verfügt die Schaltungsanordnung 1a über einen Netzeingang 2 und einen Gleichrichter 8. Die Zwischenkreisschaltung Z ist über eine Kommutierungselektronik 7 mit dem EC-Motor 1 verbunden. Die Zwischenkreisschaltung Z besitzt im Nennbetrieb die Nennspannung U_{ZK}, die von der Netzeingangsschaltung 2a und dem Gleichrichter 8 erzeugt wird. Vor der Zwischenkreisschaltung Z ist eine Leistungsfaktorkorrekturschaltung (PFC) vorgesehen.

Die Kapazität des Kondensators C_{Z} ist dabei so bemessen, dass beim Anlegen einer Netzwechselspannung U_{N} eine pulsierende Gleichspannung im Zwischenkreis Z erzeugt wird.

Zur Reduzierung der Wechselspannungsanteile in der pulsierenden Gleichspannung ist eine primäre Regelungseinrichtung 4 und eine sekundäre bzw. weitere Regelung 5 ausgebildet, um den Motorstrom zu regeln. Dabei berücksichtigt die Regelung 4 eine id-Sollwertvorgabe id-S, eine Solldrehzahl w und eine Trajektorienplanung TP, bei der die Drehzahl-Vorgabe der id-Stromverlauf und der Drehwinkel DW als Parameter verwendet werden. Daraus werden die Trajektorienparameter TPp erzeugt und zu einem flachheitsbasierendem Zustandsregler FZ mit Beobachter übergeben. Der flachheitsbasierendem Zustandsregler FZ mit Beobachter erhält nach einer Clark/Park Transformation C/P in die Größen id-Mess und iq-Mess. Die Spannungsgrößen u_{d} und u_{q} werden von dem flachheitsbasierenden Zustandsregler FZ an das Clark-Park-Stellglied P/C übergeben, das zusätzlich die Größen wie Winkelstellung, sowie Plus und Minus der Zwischenkreisspannung U_{ZK} verarbeitet, um daraus die Spannungsgrößen uₐ, u_{b} und u_{c} zu gewinnen. Diese werde mittels einer 3-phasigen Strommessung SM an den Motor übergeben. Die 3-phasigen Strommessung SM übergibt dabei den Stromwert l_{abc} zurück an das C/P Stellglied.

Es erfolgt somit die Regelung des id-Stromanteils derart, dass die pulsierende elektrische Energie als magnetische Energie im EC-Motor 1 zumindest für eine vorgegebene Zeitspanne gespeichert werden kann.

Ferner dient die Regelung 5, um die Amplitude I_{A} (wie in der Figur 2 dargestellt) und Phasenlage des id-Stroms gegenüber der Netzwechselspannung U_{N} einzustellen, wobei die erzeugte pulsierende elektrische Energie durch die Regelung des id-Stromanteils mittels der primären Regelung 4 als magnetische Energie im EC-Motor 1 gespeichert wird. Die durch die Pulsation der Gleichspannung hervorgerufene unerwünschte Pulsation des Motordrehmomentes, infolge einer bewusst unterdimensionierten Kondensatorenkapazität, kann durch die Steuerung 4, 5 des id-Stromes ausgeglichen werden. Der dazu benötigte id-Stromverlauf ist in der Figur 2 zu sehen, wobei nur negative Stromimpulse erzeugt werden.

## Patentansprüche

1. Verfahren zur Reduzierung der Drehmomentwelligkeit und Geräuschentwicklung eines einphasig gespeisten EC-Motors (1) mit einer Zwischenspeicherung von elektrischer Energie in dem EC-Motor (1), der mit einer, einen Kondensator (3) aufweisenden Leistungsfaktorkorrekturschaltung (PFC) am Netzeingang (2) für eine bestimmte Netzwechselspannung U_{N} ausgebildet ist, wobei die Kapazität des Kondensators (C_{Z}) so bemessen ist, dass beim Anlegen der Netzwechselspannung U_{N} eine pulsierende Gleichspannung in einem Zwischenkreis (Z) erzeugt wird, wobei die dadurch erzeugte pulsierende elektrische Energie durch eine primäre Regelung (4) des id-Stromanteils als magnetische Energie im EC-Motor (1) zumindest für eine vorgegebene Zeitspanne gespeichert wird, **dadurch gekennzeichnet, dass** zur Steuerung des id-Stroms eine Trajektorien gesteuerte flachheitsbasierte nichtlineare Regelung im Zustandsraum verwendet wird.

2. Verfahren nach Anspruch 1, **dadurch gekennzeichnet, dass** die Steuerung (4) zur Speicherung der Energie die Anpassung des feldbildenden id-Stromanteils umfasst.

3. Verfahren nach Anspruch 1 oder 2, **dadurch gekennzeichnet, dass** die Frequenz der id-Strom-Trajektorie der doppelten Netzfrequenz der Netzwechselspannung U_{N} entspricht und mit der Netzfrequenz synchronisiert wird.

4. Verfahren nach einem der vorhergehenden Ansprüche, **dadurch gekennzeichnet, dass** die Amplitude und Phasenlage des id-Stroms gegenüber der Netzwechselspannung U_{N} von einer zweiten, der primären Regelung überlagerten id-Sollwertvorgabe so eingestellt wird, dass die Pulsation der im Zwischenkreis (Z) erzeugten Gleichspannung reduziert oder minimiert wird.

5. Verfahren nach Anspruch 4, **dadurch gekennzeichnet, dass** die Amplitude des id-Stromes bei der Regelung im möglichen Amplituden-Phasenlagen-Regelfeld möglichst klein gewählt wird.

6. Verfahren nach einem der vorhergehenden Ansprüche, **dadurch gekennzeichnet, dass** die Amplitude des id-Stroms negativ eingeprägt wird, um durch die dadurch erzielte Feldschwächung eine Reduzierung der Eisenverluste im EC-Motor (1) zu erhalten.

7. Einphasig speisbarer EC-Motor (1) mit einer Schaltungsanordnung (1a) mit einem Zwischenkreis (Z) umfassend:
a. einen Netzeingang (2) zum Anschluss an wenigstens eine bestimmte Netzwechselspannung U_{N},
b. eine netzeingangsseitige Leistungsfaktorkorrekturschaltung (PFC) mit einem Kondensator (C_{Z}), wobei die Kapazität des Kondensators (C_{Z}) so bemessen ist, dass beim Anlegen einer Netzwechselspannung U_{N} eine pulsierende Gleichspannung U_{ZK} im Zwischenkreis (Z) erzeugt wird, **gekennzeichnet durch**
c. eine primäre Regelungseinrichtung (4) umfassend eine Trajektorienplanung (TP) und einen flachheitsbasierenden Zustandsregler (FZ) ausgebildet, zur Regelung des id-Stromanteils derart, dass die pulsierende elektrische Energie als magnetische Energie im EC-Motor (1) zumindest für eine vorgegebene Zeitspanne gespeichert werden kann.

8. EC-Motor (1) nach Anspruch 7, **dadurch gekennzeichnet, dass** eine zweite Regelung (5) vorgesehen ist, um die Amplitude (l_{A}) und Phasenlage des id-Stroms gegenüber der Netzwechselspannung U_{N} einzustellen.

9. EC-Motor (1) nach Anspruch 8, **dadurch gekennzeichnet, dass** die zweite Regelung (5) zur Anpassung der Phasenlage und Amplitude des id-Stroms so ausgebildet ist, dass damit die Pulsation einer im Zwischenkreis (Z) erzeugten Gleichspannung reduziert oder minimiert wird.

## Claims

1. A method for reducing the torque ripple and noise evolution of a single-phase feed EC motor (1) with a buffer-storing of electrical energy in the EC motor (1), which is formed with a power factor correction circuit (PFC) having a capacitor (3) at the power supply system input (2) for a specific power supply system AC voltage U_{N}, wherein the capacitance of the capacitor (C_{Z}) is dimensioned such that when the power supply system AC voltage U_{N} is applied, a pulsating DC voltage is generated in a link circuit (Z), wherein the pulsating electrical energy generated thereby is stored by means of a primary regulation (4) of the id current component as magnetic energy in the EC motor (1) at least for a predefined time period, **characterized in that** a trajectory controlled, flatness-based, nonlinear regulation in the state space is used for controlling the id current.

2. The method according to Claim 1, **characterized in that** the regulation (4) for storing the energy comprises the adjustment of the field-generating id current component.

3. The method according to Claim 1 or 2, **characterized in that** the frequency of the id current trajectory is equivalent to double the power supply system frequency of the power supply system AC voltage U_{N}, and that it is synchronized with the power supply system frequency.

4. The method according to any one of the preceding claims, **characterized in that** the amplitude and phase position of the id current compared to those of the power supply system AC voltage U_{N} are adjusted by a second id target value specification, which is superimposed on the primary regulation, such that the pulsation of the DC voltage generated in the link circuit (Z) is reduced or minimized.

5. The method according to Claim 4, **characterized in that** the amplitude of the id current is selected to be as low as possible during the regulation within the available amplitude-phase position regulation field.

6. The method according to any one of the preceding claims, **characterized in that** the amplitude of the id current is set to a negative value to achieve a reduction of the iron losses in the EC motor (1) due to the resulting field weakening.

7. A single-phase feedable EC motor (1) having a circuit arrangement (1a) having a link circuit (Z), comprising:
a. a power supply system input (2) for connecting to at least one specific power supply system voltage U_{N},
b. a power factor correction circuit (PFC), on the side of the power supply system input, having a capacitor (C_{Z}), wherein the capacitance of the capacitor (C_{Z}) is dimensioned such that when a power supply system voltage U_{N} is applied, a pulsating DC voltage U_{ZK} is generated in the link circuit (Z), **characterized in that**
c. a primary regulating device (4), comprising a trajectory plan (TP) and a flatness-based state regulator (FZ), for regulating the id current component in such a manner that the pulsating electrical energy can be stored as magnetic energy in the EC motor (1) at least for a predefined period of time.

8. The EC motor (1) according to Claim 7, **characterized in that** a second regulation (5) is provided to adjust the amplitude (l_{A}) and phase position of the id current compared to those of the power supply system voltage U_{N}.

9. The EC motor (1) according to Claim 8, **characterized in that** the second regulation (5) for adjusting the phase position and amplitude of the id current is formed such that the pulsation of a DC voltage generated in the link circuit (Z) is reduced or minimized.

## Revendications

1. Procédé permettant de réduire l'ondulation du couple et l'émission de bruit d'un moteur EC (1) à alimentation monophasée avec un stockage intermédiaire d'énergie électrique dans le moteur EC (1) qui est réalisé avec un circuit de correction de facteur de puissance (PFC), présentant un condensateur (3), à l'entrée de réseau pour une tension alternative de réseau U_{N} déterminée, la capacité du condensateur (C_{Z}) étant dimensionnée de telle sorte que lorsque la tension alternative de réseau U_{N} est appliquée, une tension continue puisée est produite dans un circuit intermédiaire (Z), l'énergie électrique pulsée ainsi produite étant stockée, par une régulation primaire (4) de la part de courant id, sous forme d'énergie magnétique dans le moteur EC (1) au moins pendant une période prédéfinie, **caractérisé en ce que** pour la commande du courant id, une régulation non linéaire, basée sur la platitude et commandée par des trajectoires, est utilisée dans l'espace d'états.

2. Procédé selon la revendication 1, **caractérisé en ce que** la commande (4) destinée au stockage de l'énergie comprend l'adaptation de la part de courant id formant le champ.

3. Procédé selon la revendication 1 ou 2, **caractérisé en ce que** la fréquence de la trajectoire de courant id correspond au double de la fréquence de réseau de la fréquence alternative de réseau U_{N} et est synchronisée avec la fréquence de réseau.

4. Procédé selon l'une quelconque des revendications précédentes, **caractérisé en ce que** l'amplitude et la position de phase du courant id par rapport à la tension alternative de réseau U_{N} est réglée par une deuxième spécification de valeur de consigne id superposée à la régulation primaire de telle sorte que la pulsation de la tension continue produite dans le circuit intermédiaire (Z) est réduite ou minimisée.

5. Procédé selon la revendication 4, **caractérisé en ce que** l'amplitude du courant id est choisie pour être aussi faible que possible lors de la régulation dans le champ de régulation amplitude/position de phase potentiel.

6. Procédé selon l'une quelconque des revendications précédentes, **caractérisé en ce que** l'amplitude du courant id est appliquée de manière négative afin d'assurer par l'affaiblissement de champ ainsi obtenu une réduction des pertes dans le fer dans le moteur EC (1).

7. Moteur EC (1) à alimentation monophasée, comprenant un ensemble de circuits (1a) doté d'un circuit intermédiaire (Z) comprenant :
a. une entrée de réseau (2) pour la connexion à au moins une tension alternative de réseau U_{N} déterminée,
b. un circuit de correction de facteur de puissance (PFC) côté entrée de réseau, doté d'un condensateur (C_{Z}), la capacité du condensateur (Ca) étant dimensionnée de telle sorte que lorsqu'une tension alternative de réseau U_{N} est appliquée, une tension continue pulsée U_{ZK} est produite dans le circuit intermédiaire (Z),
**caractérisé par**
c. un dispositif de régulation primaire (4) comprenant une planification de trajectoire (TP) et un régulateur d'état basé sur la platitude (FZ) pour réguler la part de courant id de telle sorte que l'énergie électrique pulsée peut être stockée sous forme d'énergie magnétique dans le moteur EC (1) au moins pendant une période prédéfinie.

8. Moteur EC (1) selon la revendication 7, **caractérisé en ce qu'**une deuxième régulation (5) est prévue pour régler l'amplitude (l_{A}) et la position de phase du courant id par rapport à la tension alternative de réseau U_{N}.

9. Moteur EC (1) selon la revendication 8, **caractérisé en ce que** la deuxième régulation (5) pour l'adaptation de la position de phase et de l'amplitude du courant id est réalisée de telle sorte que la pulsation d'une tension continue produite dans le circuit intermédiaire (Z) est réduite ou minimisée par celle-ci.
